# EUROPÄISCHE PATENTSCHRIFT

(11) **EP 0 912 301 B1**
(45) Veröffentlichungstag und Bekanntmachung des Hinweises auf die Patenterteilung: **15.03.2000**
(21) Anmeldenummer: 97932716.0
(22) Anmeldetag: 02.07.1997
(51) Int. Cl.: B26D 1/11, B26D 7/10, B26D 3/24, A21C 15/04

(54) **VORRICHTUNG ZUM SCHNEIDEN VON TORTEN UND ÄHNLICHEN KUCHENARTEN**
DEVICE FOR CUTTING PIES AND SIMILAR TYPES OF CAKES
DISPOSITIF A DECOUPER DES TARTES ET DES TYPES SIMILAIRES DE GATEAUX

(30) Priorität: 10.07.1996 DE 29611968 U
(43) Veröffentlichungstag der Anmeldung: 06.05.1999
(73) Patentinhaber: Krumbein, Wolfgang, 99891 Tabarz (DE)
(72) Erfinder: Krumbein, Wolfgang, 99891 Tabarz (DE)
(74) Vertreter: WALTHER, WALTHER & HINZ Patentanwälte
(86) Internationale Anmeldenummer: DE9701381
(87) Internationale Veröffentlichungsnummer: WO9801267

(56) Entgegenhaltungen:
- EP-A- 0 635 340
- DE-A- 3 623 165
- DE-U- 8 914 748
- NL-A- 7 514 894
- US-A- 1 342 875
- US-A- 2 821 254
- US-A- 3 236 128

## Beschreibung

Die Erfindung betrifft eine Vorrichtung zum Schneiden von Torten und ähnlichen Kuchenarten, mit einem als Parallelogrammschwinge ausgebildeten Gestell zur Aufnahme von einem Messer, und einer Antriebsvorrichtung für die Parallelogrammschwinge zur wechselweisen Auslenkung des Messers in jeweils eine Richtung.

Aus der US-A-2 821 254 ist eine Vorrichtung zum Schneiden von Schaumstoffblöcken bekannt, wobei ein Messer vorgesehen ist, das durch zwei Kurbelstangen relativ zu dem zu schneidenden Schaumstoffblock beweglich ist.

Aus der US-A-1 342 875 ist eine Vorrichtung zum Schneiden von Kuchen bekannt, bei der durch einen Rahmen mehrere parallel zueinander angeordnete Messer aufgenommen werden. Dieser Rahmen ist Bestandteil einer Parallelogrammschwinge, die durch eine Antriebseinrichtung betätigbar ist. Zwar wird in dieser Literaturstelle dargelegt, daß durch eine überlagerte horizontale und vertikale Bewegung der Messer sichergestellt sein soll, daß Teile des Kuchens nicht an den Messern kleben bleiben, es hat sich jedoch gezeigt, daß mit dieser Vorrichtung diese Nachteile nicht zu beheben sind. Vielmehr kann nicht gewährleistet werden, daß insbesondere beim Schneiden von Obstkuchen das Obst nicht durch das Messer abgehoben wird.

Der Erfindung liegt daher die Aufgabe zugrunde, eine Vorrichtung zum Schneiden von Torten und ähnlichen Kuchenarten der eingangs genannten bereitzustellen, bei der sichergestellt ist, daß der Belag des Kuchens während des Schneidvorganges durch die Messer nicht abgehoben wird.

Die Aufgabe wird erfindungsgemäß dadurch gelöst, daß zwei jeweils als Parallelogrammschwinge ausgebildete Gestelle zur Aufnahme jeweils eines Messers vorgesehen sind, wobei die beiden jeweils eine Koppelstange bildenden Messer durch eine Führungseinrichtung, die die Messer aus einem breiten Einspannungsbereich zusammenfügt, aneinander anliegend, relativ zueinander verschieblich führbar sind. Hieraus wird deutlich, daß insbesondere bei Obsttorten durch die Messer jeweils im Schnittbereich das Obst fixiert geschnitten wird. Erklärbar ist dies dadurch, daß durch die Relativbewegungen der beiden Messer während des Schnittvorganges und das enge Aneinanderführen der beiden Messer, die Kräfte, die im Bereich des Schnittes durch die Messer auf den Belag ausgeübt werden, sich quasi aufheben. Das heißt, es findet eine Fixierung des Belages durch die Messer während des Schnittvorganges statt.

Während der Ausübung der Schwingbewegung des in dem Gestell eingespannten Messers wird die Torte gegen das Messer verschoben, so daß die Torte durch das Messer zerteilt wird. Vorzugsweise weist hierzu die Vorrichtung eine Hubeinrichtung zur Aufnahme der Torte auf, die in Richtung auf das Messer in der Höhe verstellbar ist. Im einzelnen zeichnet sich diese Hubeinrichtung durch einen Teller zur Aufnahme der Torte auf, der verdrehbar ist, um einzelne Tortenstücke schneiden zu können.

Nach einem vorteilhaften Merkmal der Erfindung umfaßt das Gestell zwei Kurbelstangen, die um eine jeweils etwa mittig angeordnete Drehachse verschwenkbar sind. Hieraus folgt, daß bei Auslenkung zumindest einer Kurbelstange in eine Richtung, das Messer sich genau in die entgegengesetzte Richtung bewegt.

Nach einem vorteilhaften Merkmal der Erfindung ist die eine untere Koppelstange geteilt ausgebildet, wobei die beiden Stangenteile durch ein Spannschloß miteinander verbindbar sind. Hierbei wird durch das Spannschloß durch Verkürzung dieser Kurbelstange, das die andere gegenüberliegende Koppelstange bildende Messer, gegen die Drehachsen in den Kurbelstangen gespannt. Das heißt, daß mit Hilfe dieses in der unteren Koppelstange angeordnete Spannschloß das Messer in dem Gestell gespannt werden kann. Im einzelnen ist weiterhin vorgesehen, daß die Antriebsvorrichtung an einer Kurbelstange anlenkbar ist.

Als Antriebsvorrichtung zur Erzeugung einer jeweils entgegengesetzten Bewegung der Messer ist jeweils eine an einer Kurbelstange angeordnete Zahnstange vorgesehen, wobei die Zahnstangen durch ein zwischen den Zahnstangen angeordnetes Ritzel wechselseitig auslenkbar sind. Das Ritzel ist hierbei jeweils in die eine oder die andere Drehrichtung um einen Winkel drehbar antreibbar, beispielweise durch einen Antrieb ähnlich dem einer Stichsäge. Hieraus folgt, daß die Kurbelstangen und damit die beiden Messer, jeweils wechselweise in die eine oder in die andere Richtung ausgelenkt werden.

Eine andere Ausführungsform eines Antriebes zeichnet sich durch einen Exzenterantrieb aus, wobei der Exzenterantrieb durch eine Exzenterschwinge mit der einen Kurbelstange verbindbar ist. Diese eine Kurbelstange ist starr mit der anderen gegenüberliegenden Kurbelstange gekoppelt. Hieraus wird deutlich, daß durch den Antrieb der einen Kurbelstange auch die andere Kurbelstange entsprechend bewegt wird und mithin die Messer eine entsprechende Bewegung ausführen.

Nach einem vorteilhaften Merkmal der Erfindung sind das oder die Messer elektrisch aufheizbar. Denkbar ist hierbei eine induktive oder Widerstandsaufheizung der Messer. Eine derartige Heizmöglichkeit der Messer hat sich insbesondere als vorteilhaft bei dem Schneiden von gefrorenen Torten erwiesen.

Konstruktiv ist vorgesehen, daß die Hubeinrichtung und das Gestell an bzw. auf einem Tisch angeordnet sind, wobei die Hubeinrichtung in etwa mittig zu dem Messer auf dem Tisch angeordnet ist.

Anhand der Zeichnungen wird die Erfindung nachstehend näher erläutert.
- Figur 1: zeigt die Vorrichtung in einer Seitenansicht;
- Figur 2: zeigt eine Ansicht von oben mit der Anbindung der Messer an die Kurbelstangen gemäß der Linie II - II;
- Figur 3: zeigt eine Ansicht gemäß der Linie III - III aus Figur 2;

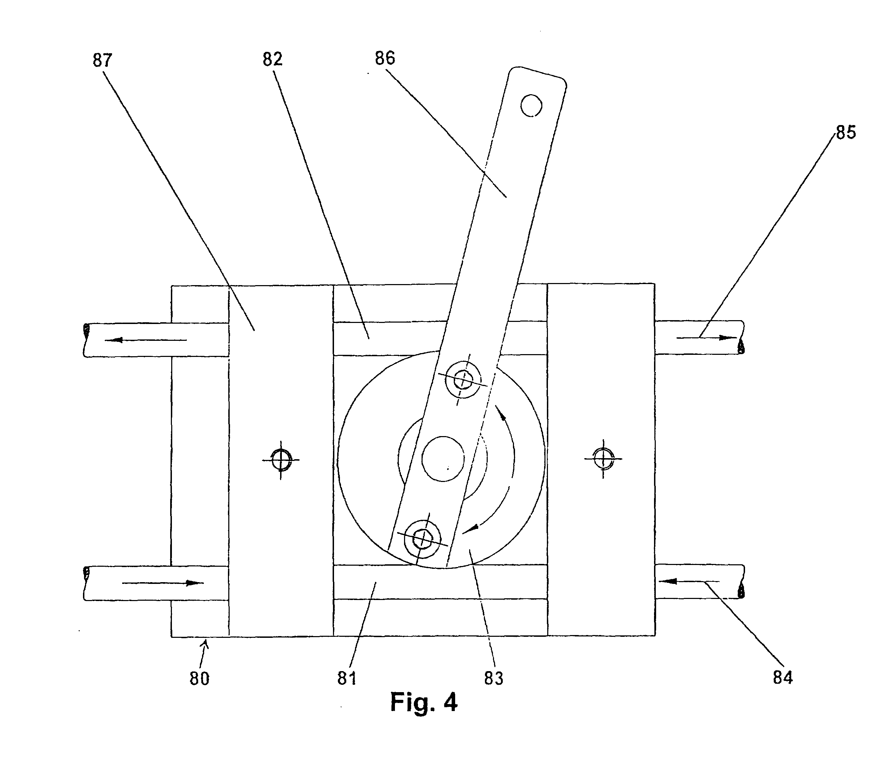

- Figur 4: zeigt den Antrieb der Kurbelstangen in einer Ansicht von oben gemäß der Einzelheit X in Figur 1.
- Figur 5: zeigt einen Antrieb der Kurbelstangen mittels Exzenter schematisch in einer Seitenansicht;
- Figur 6: zeigt einen Schnitt gemäß der Linie VI - VI aus Fig. 5.

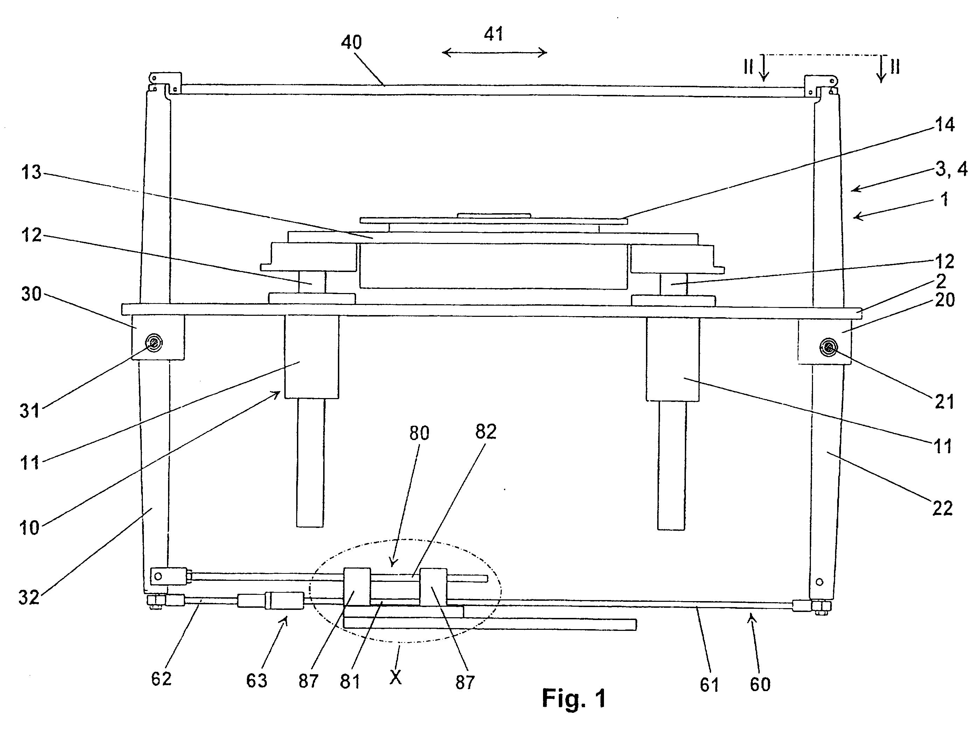

Gemäß Figur 1 weist die insgesamt mit 1 bezeichnete Vorrichtung zum Schneiden einer Torte einen Tisch 2 auf, der zum einen die mit 10 bezeichnete Hubeinrichtung aufnimmt und der zum anderen auf beiden Seiten jeweils einen Lagerbock 20, 30 aufweist, der jeweils eine Achse 21, 31 zur Aufnahme der Gestelle 3, 4 besitzt. Jedes Gestell weist die beiden Kurbelstangen 22, 32 auf, die verschwenkbar um die Achsen 21, 31 gelagert sind. Die beiden Kurbelstangen 22, 32 sind an ihrem einen oberen Ende durch das Messer 40 und an ihrem unteren Ende durch die Koppelstange 60 verbunden. Die Koppelstange 60 ist hierbei zweigeteilt ausgebildet, wobei die beiden Teile 61 und 62 der Koppelstange durch das Spannschloß 63 miteinander verbunden sind. Die Koppelstange 60 selbst ist, um die Schwenkbewegung der Kurbelstangen 22, 32 zu ermöglichen an diesen ebenfalls gelenkig angeordnet. Gleiches gilt für das Messer 40, das ebenfalls gelenkig an der Kurbelstange 22, 23 am oberen Ende angeordnet ist.

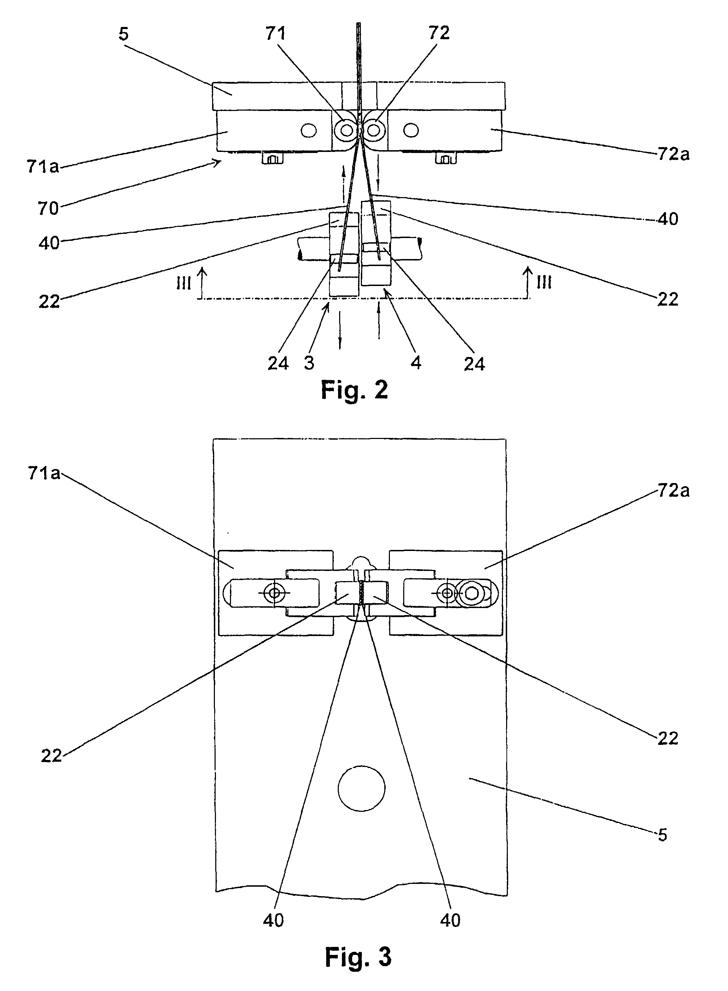

Parallel zu dem einen Gestell 3 befindet sich, wie bereits oben erwähnt, ein zweites gleiches Gestell 4, wie sich dies zu den Figuren 2 und 3 angedeutet ist. Auch dieses Gestell 4 besteht, ähnlich wie das Gestell 3, aus zwei Kurbelstangen 22, 32, die durch eine geteilte Koppelstange 60 und ein Messer 40 miteinander verbunden sind. Die Kurbelstangenpaare der Gestelle 3, 4 werden jeweils durch die Achsen 21, 31 drehbar aufgenommen. Die Kurbelstangen 22, 32 besitzen hierbei an ihrem oberen Ende jweils eine Achse 24, die zum einen der Aufnahme der Messer 40 dient, die aber ebenfalls stromführend sind, um die Messer 40 jeweils induktiv aufheizen zu können.

Damit die Messer 40 der beiden Gestelle 3, 4 aneinander anliegend gegensinnig aneinander gleiten, ist die insgesamt mit 70 bezeichnete Führungseinrichtung vorgesehen. Die mit 70 bezeichnete Führungseinrichtung besteht im wesentlichen aus zwei drehbaren Walzen 71, 72, die die Messer 40 aufeinander zu drücken. Die Walzen 71, 72 sind hierbei jeweils in einem Halter 71a, 72a gehalten, die jeweils in Richtung auf die Messer verschieblich gelagert sind, um die Anpreßkraft der Messer aufeinander einstellen zu können. Gehalten sind die Halterungen 71a, 72a durch einen am Tisch 2 angeordneten Rahmen 5. Dieser Rahmen 5 ist allerdings in Figur 1 aus Gründen der Übersichtlichkeit weggelassen.

Die Antriebsvorrichtung für die beiden Gestelle 3 und 4 ist insgesamt mit 80 bezeichnet. Die insgesamt mit 80 bezeichnete Antriebsvorrichtung umfaßt die beiden Zahnstangen 81, 82, die durch ein Zahnritzel 83 miteinander in Verbindung stehen. Bei Verschwenkung des Zahnritzels 83 in die eine oder andere Richtung werden die damit verbundenen Zahnstangen 81, 82 in jeweils entgegengesetzte Richtung (Pfeile 84 und 85) ausgelenkt. Die Auslenkung selbst erfolgt durch eine an dem Zahnritzel angeordnete Schwinge 86, die durch einen Antrieb, beispielsweise dem ähnlich einer Stichsäge, um einen bestimmten Winkel ausgelenkt wird. Durch die entsprechend gegenläufige Bewegung der Zahnstangen 81, 82 werden die Kurbelstangen 22, 32 der beiden Gestelle 3, 4 entsprechend gegenläufig bewegt, so daß die Messer 40 der jeweiligen Gestelle 3, 4 eine gegensinnige Relativbewegung zueinander ausführen. Gelagert sind die Zahnstangen 81, 82 und das Ritzel 83 durch die beiden Lagerböcke 87, die die Zahnstangen 81, 82 entsprechend verschieblich aufnehmen.

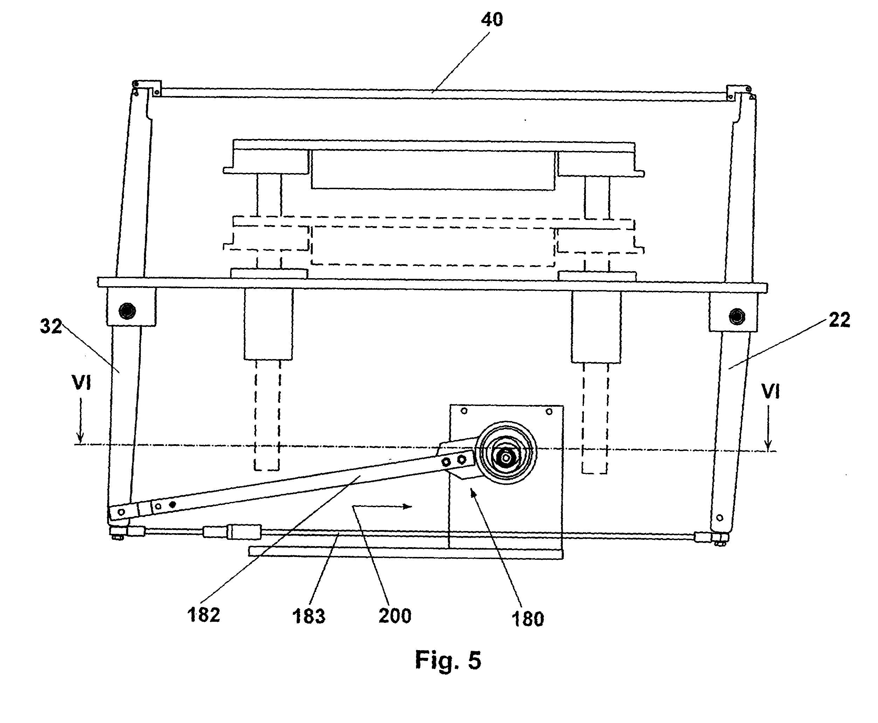

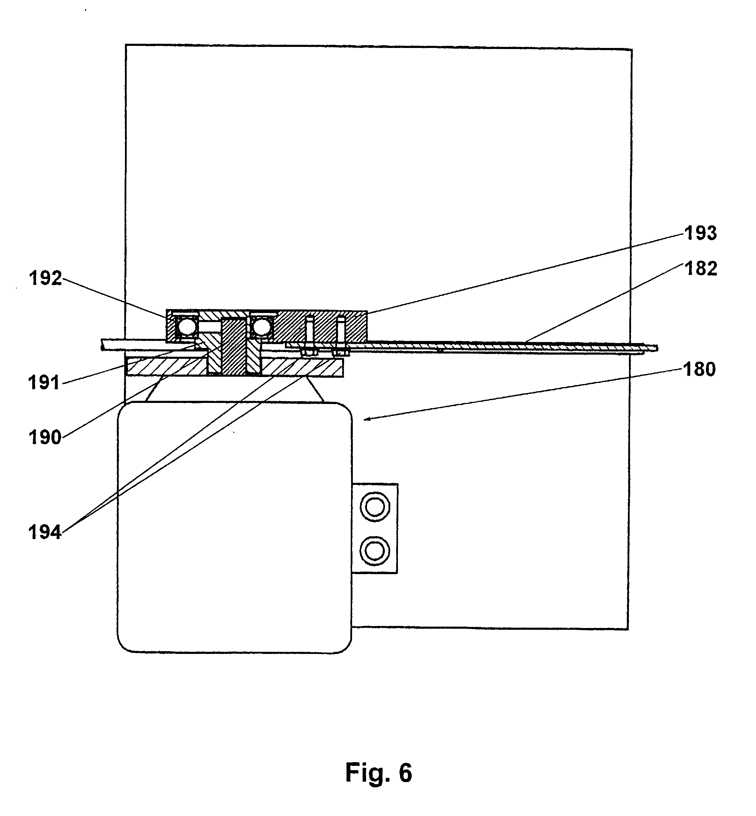

Bei dem Antrieb gemäß Figur 5 und Figur 6 ist ein Exzenterantrieb 180 vorgesehen, wobei der Exzenterantrieb durch eine Exzenterschwinge 182 mit der Kurbelstange 32 in Verbindung steht. Die Kurbelstange 32 ist mit der gegenüberliegenden Kurbelstange 22 durch eine Koppelstange 183 gekuppelt; hierdurch wird eine Übertragung der Bewegung der Kurbelstange 32 auf die Kurbelstange 22 bewirkt. Zur Betätigung des zweiten Messers ist gespiegelt zu dieser Vorrichtung eine weitere Antriebsvorrichtung vorgesehen. Diese beiden Exzenterantriebe sind derart zueinander geschaltet, daß die Messer sich gegenläufig bewegen, wie dies aus der ersten Ausführungsform an sich bekannt ist. Die Verbindung des Antriebs 180 mit der Exzenterschwinge erfolgt im Einzelnen über eine Welle 190, die einen Exzenter 191 zeigt. Auf dem Exzenter 191 befindet sich ein Lager 192, das ein Gehäuse 193 trägt. An dem Gehäuse 193 ist durch die Schrauben 194 die Exzenterschwinge 182 befestigt. Bei Drehung des Exzenters 191 wird ähnlich einem Kurbelantrieb die Exzenterschwinge 182 entsprechend der Bewegung des Exzenters bewegt. Diese Bewegung, die auch eine Bewegung in Richtung des Pfeiles 200 beinhaltet ist möglich, weil die Exzenterschwinge 182 an der Kurbelstange 32 gelenkig befestigt. ist.

Die insgesamt mit 10 bezeichnete Hubeinrichtung, die am Tisch 2 befestigt ist, besteht im einzelnen aus zwei Kolbenzylinderantrieben 11, wobei die beiden Stempel 12 des Kolbenzylinderantriebes einen Tisch 13 aufnehmen, der wiederum einen drehbaren Teller 14 für die Torte aufweist.

Der Schnittvorgang erfolgt nun der Art, daß während der Bewegung der Messer 40 in Richtung des Pfeiles 41 durch die Kolbenzylinderantriebe 11 der Tisch 13 und damit der Teller 14 kontinuierlich in Richtung auf die Messer zubewegt wird, wobei hierbei die Torte entsprechend geteilt wird. Nach jedem Schnitt wird der Teller 14 um einen bestimmten Winkel, entsprechend der gewünschten Größe der Tortenstücke, gedreht.

## Patentansprüche

1. Vorrichtung zum Schneiden von Torten und ähnlichen Kuchenarten, mit einem als Parallelogrammschwinge ausgebildeten Gestell (3, 4)zur Aufnahme von einem Messer (40), und einer Antriebsvorrichtung (80, 180) für die Parallelogrammschwinge zur wechselweisen Auslenkung des Messers in jeweils eine Richtung,
**dadurch gekennzeichnet,**
daß zwei jeweils als Parallelogrammschwinge ausgebildete Gestelle (3, 4) zur Aufnahme jeweils eines Messers (40) vorgesehen sind, wobei die beiden jeweils eine Koppelstange bildenden Messer (40) durch eine Führungseinrichtung (70), die die Messer aus einem breiten Einspannungsbereich zusammenfügt, aneinander anliegend, relativ zueinander verschieblich führbar sind.

2. Vorrichtung nach Anspruch 1,
**dadurch gekennzeichnet**, daß
das Gestell (3, 4) zwei Kurbelstangen (22, 32) umfaßt, die um eine jeweils etwa mittig angeordnete Drehachse (21, 31) verschwenkbar sind.

3. Vorrichtung nach einem der voranstehenden Ansprüche,
**dadurch gekennzeichnet**, daß
die untere Koppelstange (60) geteilt ausgebildet ist, wobei die beiden Stangenteile (61, 62) durch ein Spannschloß (63) miteinander verbindbar sind.

4. Vorrichtung nach Anspruch 3,
**dadurch gekennzeichnet**, daß
durch das Spannschloß (63), das die andere gegenüberliegende Koppelstange bildende Messer (40) gegen die Drehachsen (21, 31) in den Kurbelstangen (22, 32) spannbar ist.

5. Vorrichtung nach einem der voranstehenden Ansprüche,
**dadurch gekennzeichnet**, daß
die Antriebsvorrichtung (80, 180) an einer Kurbelstange (32) anlenkbar ist.

6. Vorrichtung nach Anspruch 5,
**dadurch gekennzeichnet**, daß
die Antriebsvorrichtung (80) eine jeweils an einer Kurbelstange (32) angeordnete Zahnstange (81. 82) umfaßt, die durch ein zwischen diesen Zahnstangen angeordnetes Ritzel (83) wechselseitig auslenkbar ist.

7. Vorrichtung nach Anspruch 6,
**dadurch gekennzeichnet**, daß
das Ritzel (83) in die eine und die andere Drehrichtung um einen Winkel drehbar antreibbar ist.

8. Vorrichtung nach einem der voranstehenden Ansprüche,
**dadurch gekennzeichnet**, daß
das Messer (40) elektrisch aufheizbar ist.

9. Vorrichtung nach einem der voranstehenden Ansprüche,
**dadurch gekennzeichnet**, daß
die Vorrichtung (1) eine Hubeinrichtung (10) zur Aufnahme der Torte aufweist, die in Richtung auf das Messer (40) in der Höhe verstellbar ist.

10. Vorrichtung nach Anspruch 9
**dadurch gekennzeichnet**, daß
die Hubvorrichtung (10) einen Teller (14) zur Aufnahme der Torte aufweist, der verdrehbar ist.

11. Vorrichtung nach einem der voranstehenden Ansprüche,
**dadurch gekennzeichnet**, daß
die Hubeinrichtung (10) und das Gestell (3, 4) an bzw. auf einem Tisch (2) angeordnet sind, wobei die Hubeinrichtung (10) in etwa mittig zu dem Messer (40) auf dem Tisch (2) angeordnet ist.

12. Vorrichtung nach Anspruch 1,
**dadurch gekennzeichnet**, daß
die Antriebsvorrichtung (180) einen Exzenterantrieb (181) umfaßt.

13. Vorrichtung nach Anspruch 12,
**dadurch gekennzeichnet**, daß
der Exzenterantrieb (181) durch eine Exzenterschwinge (182) mit der Kurbelstange (32) verbindbar ist.

## Claims

1. Device for cutting pies and similar types of cakes equipped with a frame (3, 4) designed as a parallelogram oscillating crank receiving a knife (40) and with a driving device (80, 180) for the parallelogram oscillating crank used for the alternate deviation of the knife in one direction at a time,
**characterized in that**
two frames (3, 4), each designed as a parallelogram oscillating crank receiving one knife (40), are provided, the two knives (40) constituting one connecting rod each and being adjacent and guidable relative to one another thanks to a guiding device (70) that joins the knives (40) fixed within a broad fixing range.

2. Device according to claim 1,
**characterized in that**
the frame (3, 4) comprises two coupling rods (22, 32) which are pivotable on a rotational axis (21, 31) situated approximately in the center of each rod.

3. Device according to one of the previous claims,
**characterized in that** the one lower connecting rod (60) is divided, whereas the two rod parts (61, 62) may be connected by a tension jack (63).

4. Device according to claim 3,
**characterized in that** the knife (40) constituting the other, opposite connecting rod, is extended against the axes of rotation (21, 31) in the coupling rods (22, 32) by the tension jack (63).

5. Device according to one of the previous claims,
**characterized in that** the driving device (80, 180) may be linked on a coupling rod (32).

6. Device according to claim 5,
**characterized in that** the driving device (80) comprises a toothed rack (81, 82) arranged on each coupling rod (32) whereas said toothed rack may be reciprocally deviated by a pinion (83) arranged between said toothed racks.

7. Device according to claim 6,
**characterized in that** the pinion (83) may be driven by rotation in one or the other rotational direction by an angle.

8. Device according to one of the previous claims,
**characterized in that** the knife (40) may be electrically heated.

9. Device according to one of the previous claims,
**characterized in that** the device (1) is provided with a lifting device (10) that receives the pie and that is adjustable in height in the direction pointing towards the knife (40).

10. Device according to claim 9,
**characterized in that** the lifting device (10) has a plate (14) that receives the pie and that is rotatable.

11. Device according to one of the previous claims,
**characterized in that** the lifting device (10) and the frame (3, 4) are arranged on or at a table (2), whereas the lifting device (10) is arranged on the table (2) so as to be approximately in a central position relative to the knife (40).

12. Device according to claim 1,
**characterized in that** the actuation device (180) comprises an eccentric actuation (181).

13. Device according to claim 12,
**characterized in that** the eccentric actuation (181) may be connected to the coupling rod (32) by means of an eccentric oscillating crank (182).

## Revendications

1. Dispositif pour couper des gâteaux et des tartes pourvu d'un cadre (3, 4) sous forme de bielle oscillante de parallélogramme destiné à recevoir un couteau (40) et d'un dispositif d'entraînement (80, 180) pour la bielle oscillante de parallélogramme permettant de dévier le couteau en alternance dans l'une ou l'autre direction,
**caractérisé en ce que**
deux cadres (3, 4) sous forme de bielle oscillante de parallélogramme et destinés à recevoir un couteau (40) chacun sont prévus, les deux couteaux (40) constituant chacun une tige de couplage et pouvant être guidés par un dispositif de guidage (70) qui rassemble les couteaux (40) abloqués à une certaine distance l'un de l'autre de façon à ce qu'ils soient adjacents et qu'ils puissent coulisser l'un par rapport à l'autre.

2. Dispositif selon la revendication 1,
**caractérisé en ce que** le cadre (3, 4) comprend deux bielles motrices (22, 32) qui peuvent être pivotées sur un axe de rotation (21, 31) prévu plus ou moins au centre.

3. Dispositif selon l'une des revendications précédentes,
**caractérisé en ce que** la tige de couplage inférieure (60) est divisée, les deux parties de la tige (61, 62) pouvant être reliées par un tendeur à vis (63).

4. Dispositif selon la revendication 3,
**caractérisé en ce que**, grâce au tendeur à vis (63), le couteau (40) formant l'autre tige de couplage opposée peut être abloqué à l'encontre des axes de rotation (21, 31) dans les bielles motrices (22, 32).

5. Dispositif selon l'une des revendications précédentes,
**caractérisé en ce que** le dispositif d'entraînement (80, 180) peut être articulé à une bielle motrice (32).

6. Dispositif selon la revendication 5,
**caractérisé en ce que** le dispositif d'entraînement (80) comprend une tige de crémaillère (81, 82) disposée sur chacune des bielles motrices (32), les tiges de crémaillère pouvant être déviées en alternance par un pignon (83) aménagé entre les tiges de crémaillère.

7. Dispositif selon la revendication 6,
**caractérisé en ce que** le pignon (83) peut être entraîné en le faisant tourner dans l'une ou l'autre direction selon un angle déterminé.

8. Dispositif selon l'une des revendications précédentes,
**caractérisé en ce que** le couteau (40) peut être chauffé électriquement.

9. Dispositif selon l'une des revendications précédentes,
**caractérisé en ce que** le dispositif (1) est équipé d'un dispositif de levage (10) qui est réglable en hauteur en direction du couteau (40) et qui est destiné à recevoir le gâteau.

10. Dispositif selon la revendication 9,
**caractérisé en ce que** le dispositif de levage (10) est pourvu d'une assiette (14) destinée à recevoir le gâteau, ladite assiette étant tournante.

11. Dispositif selon l'une des revendications précédentes,
**caractérisé en ce que** le dispositif de levage (10) et le cadre (3, 4) sont disposés à ou sur une table (2), le dispositif de levage (10) étant disposé sur la table (2) de façon à se trouver à peu près au milieu par rapport au couteau (40).

12. Dispositif selon la revendication 1,
**caractérisé en ce que** le dispositif d'entraînement (180) comprend une commande à excentrique (181).

13. Dispositif selon la revendication 12,
**caractérisé en ce que** la commande à excentrique (181) peut être reliée à l'une des bielles motrices (32) par une bielle oscillante à excentrique (182).
